# EUROPÄISCHE PATENTSCHRIFT

(11) **EP 2 411 180 B1**
(45) Veröffentlichungstag und Bekanntmachung des Hinweises auf die Patenterteilung: **23.04.2014**
(21) Anmeldenummer: 10716460.0
(22) Anmeldetag: 23.03.2010
(51) Int. Cl.: B23Q 17/20, B21D 28/14, B21D 28/26, B21D 28/34

(54) **WERKZEUGKOMPONENTE MIT EINER KENNZEICHNUNG ZUR ANZEIGE DES NACHSCHLEIFENZUSTANDS UND WERKZEUGMASCHINE MIT EINER SOLCHEN WERKZEUGKOMPONENTE**
TOOL COMPONENT AND MACHINE TOOL
COMPOSANT D'OUTIL ET MACHINE-OUTIL

(30) Priorität: 25.03.2009 DE 202009003795 U
(43) Veröffentlichungstag der Anmeldung: 01.02.2012
(73) Patentinhaber: TRUMPF Werkzeugmaschinen GmbH & Co. KG, 71254 Ditzingen (DE)
(72) Erfinder: BÜTTNER, Stefan, 71706 Markgröningen (DE); LAIB, Wolfgang, 74354 Besigheim (DE); BRÜCHLE, Arnim, 72051 Gammertingen (DE); HEES, Markus, 71665 Vaihingen/Enz (DE); COSKUN, Yakup, 70839 Gerlingen (DE)
(74) Vertreter: Kohler Schmid Möbus
(86) Internationale Anmeldenummer: PCT/DE2010/000317
(87) Internationale Veröffentlichungsnummer: WO 2010/108478

(56) Entgegenhaltungen:
- DE-A1-102007 022 242
- JP-A- 2002 205 245
- JP-A- 2007 245 165
- JP-A- 2007 253 183

## Beschreibung

Die vorliegende Erfindung betrifft eine Werkzeugkomponente, insbesondere eine Werkzeugmatrize oder einen Werkzeugstempel, zum stanzenden und/oder umformenden Bearbeiten von Werkstücken, insbesondere von Blechen, mit einer Stirnseite zur Kontaktierung des Werkstücks, von der sich ein insbesondere zum Nachschleifen vorgesehener Werkzeugbereich erstreckt, sowie eine Werkzeugmaschine mit mindestens einer solchen Werkzeugkomponente.

Beim Nachschleifen einer Werkzeugkomponente verringert sich deren Länge in einer Richtung senkrecht zur Stirnseite um die Dicke des abgeschliffenen Materials (Nachschleiflänge), d.h. die Länge der Komponente nimmt mit zunehmender Zahl von Schleifvorgängen schrittweise ab.

Die Information über die aktuelle Nachschleiflänge bzw. über den Nachschleifzustand einer Werkzeugkomponente, z.B. eines Stanzstempels zum stanzenden Bearbeiten, ist eine notwendige Information zur Optimierung des Stanzhubes: Die aktuelle Stempellänge wird sowohl zur Berechnung der Lage des Unterteils (Matrize) benötigt, um das Durchstanzen des Werkstücks sicherzustellen, als auch zur Berechnung der Stempellage, bei welcher der Stempel (Oberteil) vollständig aus dem Werkstück herausgezogen ist. Auch ist die Information über die Nachschleiflänge zur Beantwortung der Frage relevant, ob ein Stanzhub mit einem gewählten Werkzeug (Kombination von Ober- und Unterteil) überhaupt durchgeführt werden kann, d.h. ob der Werkzeugstempel lang genug ist, um unter Berücksichtigung der Werkstückdicke den Stanzhub mit dem gewählten Werkzeug durchzuführen.

Auch bei Werkzeugmatrizen ist die Kenntnis der Nachschleiflänge erforderlich, um für einen Höhen-Ausgleich des Nachschleifvorganges zu sorgen, z.B. indem der Matrize Ausgleichsscheiben unterlegt werden, deren Gesamtdicke der Nachschleiflänge entspricht, so dass die Matrizenoberkante unabhängig vom Nachschleifzustand mit der Arbeitsebene fluchtet.

Weiterhin ist es günstig, wenn Werkzeugkomponenten im Neuzustand bzw. Werkzeugkomponenten, die nicht nachgeschliffen sind bzw. werden, von solchen Komponenten unterschieden werden können, bei denen zumindest ein Nachschleifvorgang durchgeführt wurde. Unter einer Werkzeugkomponente werden im Sinne dieser Anmeldung eine Vielzahl von Komponenten verstanden, z.B. Stanzstempel, Stempeleinsätze, Multi-Use-Stempel bzw. Matrizen- oder Matrizeneinsätze, Umformstempel, Umformmatrizen, Stanznadeln etc.

Am Werkzeug bzw. der Werkzeugkomponente kann der aktuelle Nachschleifzustand derzeit nur mit Hilfe einer Vermessung ermittelt werden. Dies erfordert einen zusätzlichen Arbeitsgang, der die Verwendung eines geeigneten Messmittels, z.B. eines Messschiebers, erfordert.

Aus der JP 2002 205245 A ist eine Vorrichtung zur Messung der Nachschleiflänge eines Stanzstempels bekannt geworden. Dort wird der Stanzstempel an einer Referenzfläche angelegt, um das Zentrum des Stempels mit dem Zentrum eines Messelements in Übereinstimmung zu bringen und den Stempel an einer Abgleichplatte anzulegen. Die Nachschleiflänge des Stanzstempels wird mittels des Messelements bestimmt.

In der DE 102007022242 A1 ist ein Schneidwerkzeug beschrieben, der ein Schneideelement aufweist. Die Tiefe einer Indikatornut stellt ein Maß für eine Nachschleifzone dar, innerhalb derer ein Nachschleifen des Schneideelements gefahrlos erfolgen kann. Bei jedem Nachschleifen verringert sich die Materialstärke des Schneideelements und die Tiefe der Indikatornut nimmt entsprechend als.

### Aufgabe der Erfindung

Es ist eine Aufgabe der vorliegenden Erfindung, eine Werkzeugkomponente bereitzustellen, deren Nachschleifzustand auf besonders einfache Weise bestimmt werden kann.

### Gegenstand der Erfindung

Diese Aufgabe wird erfindungsgemäß gelöst durch eine Werkzeugkomponente gemäß Anspruchs 1.

Erfindungsgemäß wird vorgeschlagen, an der Werkzeugkomponente eine Kennzeichnung anzubringen, die deren Nachschleifzustand beschreibt, so dass dieser ohne einen zusätzlichen Messvorgang von einem Bediener erkannt werden kann.

In einer Ausführungsform erstreckt sich die Kennzeichnung entlang des zum Nachschleifen vorgesehenen Werkzeugbereichs in einer Richtung senkrecht zur Stirnseite. In diesem Fall wird die Kennzeichnung typischer Weise bei jedem Nachschleifvorgang teilweise abgetragen, so dass die Kennzeichnung sich durch das Nachschleifen verändert, d.h. die Kennzeichnung wird durch den Nachschleifvorgang aktualisiert. Die Kennzeichnung der Werkzeugkomponente kann hierbei z.B. so ausgeführt sein, dass durch den Nachschleifvorgang die letzte Längenangabe gelöscht und die aktuelle Längenangabe angebracht wird, so dass der aktuelle Nachschleifzustand visualisiert werden kann, ohne dass es hierzu eines Messvorgangs oder einer Beschriftung nach dem Nachschleifen bedarf.

In einer erfindungsgemäßen Ausführungsform schließt sich an die Stirnseite eine Schräge an, an der die Kennzeichnung spiralförmig umläuft. Typischer Weise handelt es sich bei der Werkzeugkomponente in diesem Fall um eine Werkzeugmatrize und die Schräge wird z.B. durch eine umlaufende Fase an deren Stirnseite gebildet. An Werkzeugmatrizen ist die maximale Nachschleiflänge verhältnismäßig gering und liegt typischer Weise im Bereich um ca. 1 mm. Die spiralförmige Kennzeichnung kann eine Steigung aufweisen, die so gewählt ist, dass diese Nachschleiflänge genau bei einem Umlauf zurücklegt wird. Auf diese Weise ist es möglich, den verhältnismäßig geringen Nachschleifbetrag beim Nachschleifen (typischer Weise 0,3 mm oder weniger) zu visualisieren, da die Kennzeichnung aufgrund der geringen Steigung bei jedem Nachschleifen über einen verhältnismäßig großen Winkelbereich abgetragen wird, den der Bediener ohne weiteres Nachmessen erfassen kann.

In einer Weiterbildung umfasst die Werkzeugkomponente eine Skala zum Ablesen des Zustands der Kennzeichnung. Die Skala erleichtert die Erkennung des aktuellen Nachschleifzustands der Werkzeugkomponente, da der Anteil der Kennzeichnung, der beim Nachschleifen abgetragen wurde, mit Hilfe der Skala visuell leichter erfasst werden kann. Es versteht sich, dass die Skala nicht zusammen mit der Kennzeichnung abgetragen werden sollte, was im oben beschriebenen Fall z.B. dadurch realisiert werden kann, dass an der Schräge Nuten vorgesehen sind, die eine größere Tiefe als die Nachschleiflänge aufweisen bzw. an der Werkzeugkomponente außerhalb des zum Nachschleifen vorgesehenen Bereichs angebracht sind.

Insbesondere kann die Skala in Form eines Ziffernblatts ausgebildet sein, so dass der abgetragene Winkelbereich besonders einfach erfasst werden kann. Hierbei kann die Skala z.B. zwölf äquidistant entlang des Umfangs verteilte Markierungen aufweisen, so dass der gesamte Winkelbereich von 360° in Winkel-Intervalle von jeweils 30° unterteilt wird, wodurch bei einer Nachschleiflänge von 1 mm eine Ablesegenauigkeit von weniger als 0,1 mm erreicht werden kann. Es versteht sich, dass die Zahl der Markierungen auch größer oder kleiner gewählt werden kann, wobei insbesondere ein Ablesen des Nachschleifzustandes der Kennzeichnung auch ohne das Vorsehen einer Skala erfolgen kann.

Bei einer zweiten erfindungsgemäßen Ausführungsform verändert sich mindestens eine Eigenschaft, insbesondere die Farbe oder die Form der Kennzeichnung in Abhängigkeit vom Abstand zur Stirnseite insbesondere stufenweise. In diesem Fall dient die Kennzeichnung selbst als Skala, wenn sich durch das Abtragen deren Eigenschaften stufenweise verändern. Auf das Vorsehen einer zusätzlichen Skala, die nicht abgetragen wird, kann hierbei in der Regel verzichtet werden.

In einer Weiterbildung umfasst die Kennzeichnung eine Mehrzahl von an der Stirnseite angebrachten Ausnehmungen, die sich unterschiedlich weit in den zum Nachschleifen vorgesehenen Werkzeugbereich erstrecken. Von den unterschiedlich tiefen Ausnehmungen werden zunächst diejenigen mit der geringsten Tiefe beim Nachschleifen abgetragen. Anhand der Zahl der noch verbleibenden Ausnehmungen kann somit auf den Nachschleifzustand der Werkzeugkomponente geschlossen werden. Es versteht sich, dass günstiger Weise die Erstreckung jeder Ausnehmung ein ganzzahliges Vielfaches eines Nachschleifbetrages darstellt, der typischer Weise der Erstreckung der Ausnehmung mit der geringsten Tiefe entspricht, so dass die Ausnehmungen eine lineare Skala definieren und die Zahl der "gelöschten" Ausnehmungen mit der Nachschleiflänge linear zunimmt. Es versteht sich, dass alternativ auch eine Kennzeichnung z.B. in Form einer gestuften Bohrung an der Stirnseite vorgesehen werden kann, wobei die Zahl der Stufen Aufschluss über den Nachschleifzustand der Werkzeugkomponente liefern.

In einer Weiterbildung ist die Kennzeichnung in Form eines Stopfens ausgebildet, der in eine Öffnung an der Stirnseite der Werkzeugkomponente eingebracht ist. Der Stopfen, der typischer Weise in die Öffnung (Bohrung) eingepresst ist, kann hierbei Abschnitte mit unterschiedlicher Farbe und/oder Dicke aufweisen, anhand derer der Nachschleifzustand von einem Bearbeiter abgelesen werden kann, der die aktuelle Farbe/Dicke des Abschnittes an der Stirnseite der Werkzeugkomponente ablesen kann. Diese Ausführung wird bevorzugt bei Stanzstempeln eingesetzt, die eine größere max. Nahschleiflänge (z.B. 6-7 mm) als Werkzeugmatrizen aufweisen, so dass die Abschnitte des Stopfens hinreichend groß sind, um ein fehlerfreies Ablesen zu ermöglichen.

In einer Ausführungsform ist die Kennzeichnung in einem vorgegebenen Abstand zur Stirnseite, insbesondere außerhalb des zum Nachschleifen vorgesehenen Werkzeugbereichs, angeordnet. Typischer Weise kann eine solche Kennzeichnung an einem Werkzeugstempel vorgesehen sein und eine Grenzmarkierung bilden, die der Eintauchtiefe des zu bearbeitenden Werkstücks mit der maximalen Dicke entspricht, wobei bei unbenutztem Werkzeugstempel bei der Bestimmung des Abstands die Nachschleiflänge mit zu berücksichtigen ist. Ordnet man die Kennzeichnung in einem solchen Abstand an, ist sichergestellt, dass die Kennzeichnung nicht nur beim Abschleifen nicht abgetragen wird, sondern auch außerhalb des Bereichs der Werkzeugschneide liegt, der mit dem Werkstück in Kontakt kommt, d.h. die Kennzeichnung ist vor dem Abtrag bei der Kontaktierung durch das Werkstück geschützt.

In einer weiteren Ausführungsform ist die Kennzeichnung in einem vorgegebenen Abstand zur Stirnseite angebracht, welcher der maximalen Nachschleiflänge der Werkzeugkomponente entspricht. Insbesondere in Kombination mit der oben beschriebenen Grenzmarkierung kann ein Schema erstellt werden, anhand dessen die Einsatzfähigkeit des Werkzeugstempels für unterschiedliche Anwendungen geprüft werden kann. Es versteht sich, dass noch weitere Markierungen an der Schneide des Werkzeugs in unterschiedlichen Abständen von der Stirnseite angeordnet werden können, um eine Skala festzulegen, anhand derer der Nachschleifzustand der Werkzeugkomponente leichter ermittelt werden kann.

In einer weiteren Ausführungsform ist die Kennzeichnung auf der Stirnseite angebracht, insbesondere in Form einer Beschriftung. Die stirnseitige Beschriftung kennzeichnet den Neuzustand der Werkzeugkomponente, da die Beschriftung beim ersten Nachschleifen abgetragen wird, so dass bereits abgeschliffene Werkzeugkomponenten von Werkzeugkomponenten unterschieden werden können, bei denen noch kein Nachschleifen erfolgt ist. Insbesondere können auf diese Weise auch Werkzeugkomponenten gekennzeichnet werden, bei denen kein Nachschleifen erforderlich ist, was z.B. in der Regel bei Umformwerkzeugen, Stanznadeln etc. der Fall ist, um diese von Werkzeugkomponenten zu unterscheiden, die abgeschliffen sind bzw. werden.

In einer Ausführungsform ist die Kennzeichnung zum Ablesen mindestens einer weiteren Eigenschaft der Werkzeugkomponente ausgebildet. Die Kennzeichnung kann hierbei insbesondere zusätzliche Informationen über die Art der Werkzeugkomponente, z.B. eine Längenangabe, oder die Zugehörigkeit der Komponente zu einer bestimmten Werkzeuggruppe enthalten. Es versteht sich, dass auch eine oder mehrere zusätzliche Kennzeichnungen an der Werkzeugkomponente vorgesehen werden können, in der lediglich Informationen enthalten sind, die nicht mit dem Nachschleifzustand zusammenhängen.

Ein weiterer Aspekt der Erfindung ist verwirklicht in einer Werkzeugmaschine zum stanzenden und/oder umformenden Bearbeiten eines plattenartigen Werkstücks, vorzugsweise eines Blechs, umfassend mindestens eine Werkzeugkomponente wie oben beschrieben. An der Werkzeugmaschine können hierbei unterschiedliche Werkzeuge (Kombinationen von Ober-/Unterteil z.B. entsprechend Stempel/Matrize) vorgesehen sein, die wahlweise zur Werkstückbearbeitung in einer zugehörigen Aufnahme festgelegt werden können.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Ausführungsform einer erfindungsgemäßen Werkzeugmaschine,
- Fig. 2: eine erste Ausführungsform einer Werkzeugmatrize mit einer Kennzeichnung in Form einer umlaufenden Spirale,
- Fig. 3: eine zweite Ausführungsform einer Werkzeugmatrize, an deren Stirnseite eine Kennzeichnung mit mehreren Markierungen unterschiedlicher Tiefe vorgesehen ist,
- Fig. 4: einen Werkzeugstempel mit einer Kennzeichnung, die als Stopfen in einer stirnseitigen Bohrung einer Schneide eines Stanzstempels ausgebildet ist,
- Fig. 5: einen Stanzstempel mit einem Justierring, an dessen Stanzschneide eine Kennzeichnung der maximalen Nachschleiflänge sowie eine Grenzmarkierung angebracht sind, und
- Fign. 6a,b: zwei Stirnseiten von Umformwerkzeugen, an denen jeweils eine Kennzeichnung der Werkzeuglänge angebracht ist.

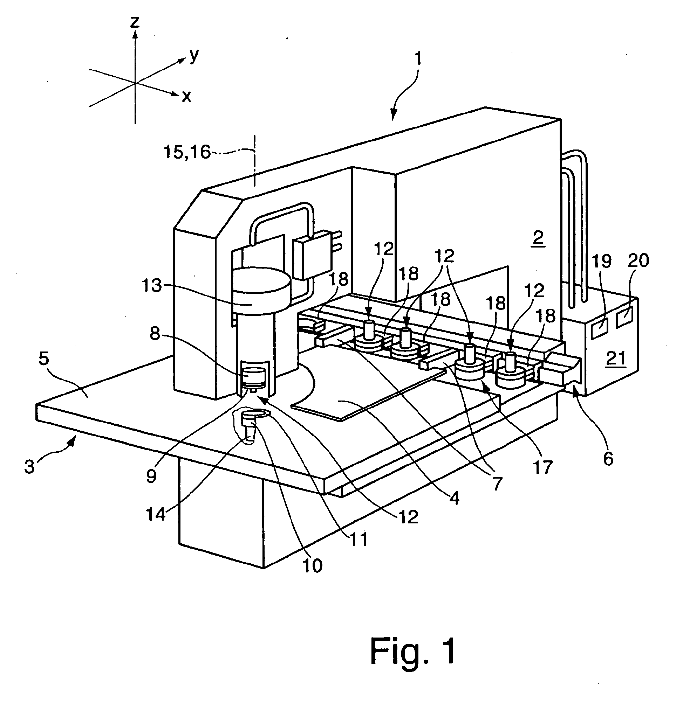

**Fig. 1** zeigt eine Werkzeugmaschine **1** zum Schneiden und/oder Umformen von plattenartigen Werkstücken in Form einer Stanz-/Umformmaschine zum Bearbeiten von Blechen. Die Stanz-/Umformmaschine 1 weist ein C-förmiges Maschinengestell **2** auf, in dessen Rachenraum eine als Werkstücktisch **3** ausgebildete Werkstückauflage angeordnet ist, welche zur Lagerung eines zu bearbeitenden Werkstücks in Form eines Bleches **4** dient. An seiner Oberseite bildet der Werkstücktisch 3 eine horizontale Auflageebene **5** für das zu bearbeitende Blech 4, welche parallel zur x/y-Ebene des in Fig. 1 gezeigten Koordinatensystems verläuft. Mittels einer Koordinatenführung **6** ist das über Spannzangen **7** eingespannte Blech 4 in der Auflageebene 5 des Werkstücktisches 3 verschiebbar.

An dem vorderen Ende des oberen Schenkels des C-förmigen Maschinengestells 2 ist eine Werkzeugstempel-Aufnahme **8** angeordnet, in welcher ein Stanzwerkzeug **9** gelagert ist, das einen Stanzstempel aufweist. Weiterhin ist an dem vorderen Ende des unteren Schenkels des C-förmigen Maschinengestells 2 eine Werkzeugmatrizen-Aufnahme **10** vorgesehen, in der eine Werkzeugmatrize **11** gelagert ist. Das Stanzwerkzeug 9 und die Werkzeugmatrize 11 bilden gemeinsam eine Werkzeugeinheit **12** zum trennenden und/oder umformenden Bearbeiten des Blechs 4. Eine Antriebseinheit der Stanz-/Umformmaschine 1 wird von einem Stempel-Antrieb **13** und einem Matrizen-Antrieb **14** in Form von Linearantrieben gebildet. Mittels des Stempel-Antriebs 13 ist die Werkzeugstempel-Aufnahme 8 mitsamt dem daran gelagerten bzw. festgelegten Stanzwerkzeug 9 entlang einer Hubachse **15** gegenüber dem Werkstücktisch 3 heb- und senkbar. In vergleichbarer Weise ist die Werkzeugmatrizen-Aufnahme 10 mitsamt der darin gelagerten bzw. festgelegten Werkzeugmatrize 11 mittels des Matrizen-Antriebs 14 entlang der Hubachse 15 gegenüber dem Werkstücktisch 3 heb- und senkbar. Weiterhin sind die Werkzeugstempel-Aufnahme 8 und die Werkzeugmatrizen-Aufnahme 10 mittels eines nicht näher gezeigten Drehantriebs um eine mit der Hubachse 15 identische Werkzeugdrehachse **16** dreheinstellbar.

An der Koordinatenführung 6 ist ein Linearmagazin **17** mit weiteren Werkzeugeinheiten 12 vorgesehen. Die in dem Linearmagazin 17 befindlichen Werkzeugeinheiten 12 werden jeweils von einer Werkzeugkassette **18** gehalten und sind je nach Bedarf zur Bearbeitung des Blechs 4 an der Werkzeugstempel-Aufnahme 8 bzw. der Werkzeugmatrizen-Aufnahme 10 festlegbar.

Beim Werkzeugwechsel und bei der Werkstückbearbeitung werden sämtliche Antriebe der Stanz-Umformmaschine 1 mittels einer numerischen Steuereinheit **21** gesteuert. Die numerische Steuereinheit 21 umfasst insbesondere Speichermittel **19** zum Speichern von Werkzeugdaten und zudem Steuermittel **20**, um sowohl die Heb-, Senk- und Drehbewegungen der Werkzeugstempel-Aufnahme 8 als auch die Heb-, Senk- und Drehbewegungen der Werkzeugmatrizen-Aufnahme 10 basierend auf den gespeicherten Daten über das Werkstück 4 bzw. das Werkzeug 12 zu bemessen und zu steuern. In den Speichermitteln 19 können insbesondere Informationen über den Nachschleifzustand der Werkzeugmatrize 11 und insbesondere des Werkzeugstempels 9 einer jeweiligen Werkzeugkassette 18 hinterlegt sein, die von einem Maschinenbediener auf Grundlage des beim Vorrüsten ermittelten Nachschleifzustands bereitgestellt wurden.

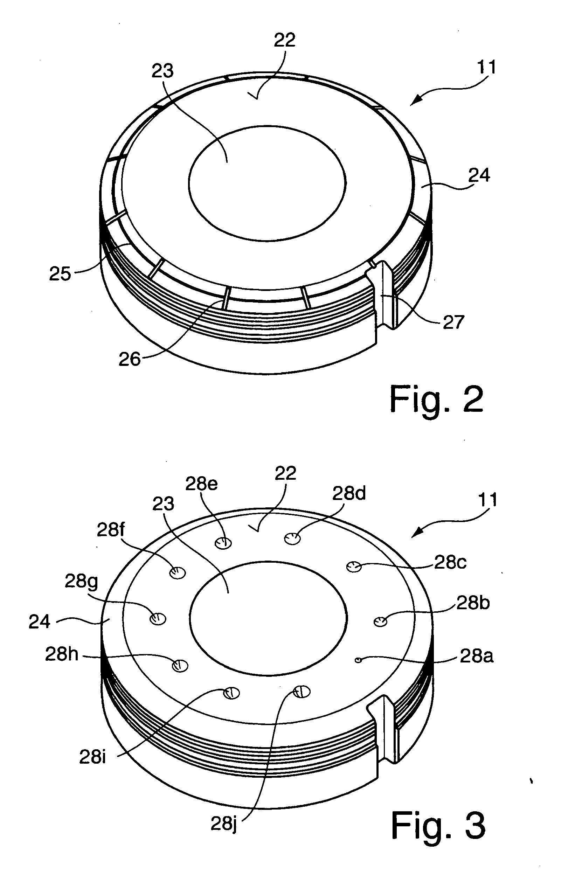

Um Informationen über den Nachschleifzustand z.B. der Werkzeugmatrize 11 auf einfache Weise - insbesondere ohne Nachmessen - zu erhalten, kann diese z.B. wie in **Fig. 2** dargestellt ausgebildet sein. Die im Wesentlichen zylinderförmige Werkzeugmatrize 11 weist eine Stirnseite **22** mit einer kreisförmigen Öffnung **23** für den Eingriff eines (nicht gezeigten) Stanzwerkzeugs auf. Entlang der Stirnseite 22 der Werkzeugmatrize 11 ist eine radial umlaufende, kegelstumpfartige Schräge **24** (Auflaufschräge bzw. Fase) gebildet, an der eine Kennzeichnung **25** in Form einer spiralförmigen Linie mit konstanter Steigung angebracht ist. Weiterhin ist an der Schräge **24** eine Skala **26** in Form eines Ziffernblatts mit zwölf sich in radialer Richtung erstreckenden Nuten angebracht.

Die spiralförmige Kennzeichnung 25 erstreckt sich senkrecht zur Stirnseite 22 bis zum maximalen Nachschleifbetrag, der im vorliegenden Fall bei ca. 1 mm liegt. Die Steigung der spiralförmigen Linie 25 ist hierbei so gewählt, dass diese bei einem Umlauf um 360° von und zu einer sich in axialer Richtung erstreckenden Keilnut **27** in einer Richtung senkrecht zur Stirnseite 22 genau eine Länge von 1 mm zurücklegt.

Beim Nachschleifen der Werkzeugmatrize 11 wird diese an der Stirnseite 22 plan abgeschliffen und ein der jeweiligen Nachschleiflänge zugehöriger Winkelbereich der Kennzeichnung 25 wird gelöscht. Im Neuzustand (Nachschleiflänge 0 mm) ist die Linie 25 über den vollständigen 360°-Winkel zu sehen. Im vollständig nachgeschliffenen Zustand wird die spiralförmige Kennzeichnung 25 vollständig abgetragen. In einem Bereich der Nachschleiflänge zwischen 0 mm < x < 1 mm ist ein Winkelbereich der Kennzeichnung 25 von y° zu sehen. Für den Nachschleifbetrag und den nicht mehr sichtbaren Winkelbereich z (in °) der Kennzeichnung 25 (z° = 360° - y°) gilt der Zusammenhang x : 1 mm = z° : 360°. Es besteht somit ein linearer Zusammenhang zwischen dem Nachschleifbetrag und dem nicht mehr sichtbaren Winkelbereich der Kennzeichnung, so dass eine einfache Erkennung des Nachschleifzustandes durch einen Bediener ermöglicht wird.

Auf die oben beschriebene Weise wird die Nachschleiflänge in einen abgetragenen Winkelbereich der Kennzeichnung 25 umgesetzt, der visuell leicht wahrnehmbar ist. Verwendet man wie oben beschrieben die Ablesegenauigkeit einer Uhr ohne Minutenskala (Schätzung eines 5-Minuten-Intervalls, also 30°), so kann der Nachschleifbetrag der Matrize an der Skala 26 auf 1 mm x 30° / 360° = 0,08 mm oder genauer abgelesen werden. Es versteht sich, dass die Ablesegenauigkeit weiter gesteigert werden kann, z.B. wenn die Skala 26 in kleinere Intervalle unterteilt wird.

Entsprechend dem ermittelten Nachschleifbetrag ist es möglich, zum Ausgleich der Nachschleiflänge geeignete Maßnahmen vorzusehen, insbesondere der Werkzeugmatrize 11 eine oder mehrere Ausgleichsscheiben unterzulegen, deren Gesamtdicke der an der Skala 26 abgelesenen aktuellen Nachschleiflänge entspricht. Hierbei kann insbesondere die Skala 26 an die minimale Scheibendicke der Ausgleichsscheiben angepasst werden. Beträgt z.B. die maximale Nachschleiflänge 1 mm und die Dicken der Ausgleichsscheiben ändern sich in Intervallen von 0,1 mm, so ist eine Skalierung mit zehn Intervallen mit jeweils 36° ausreichend.

Es versteht sich, dass zusätzlich an der Schräge 24 in den jeweiligen Winkelintervallen eine Kennzeichnung z.B. in Form einer Beschriftung angebracht werden kann, an welcher der Nachschleifbetrag ablesbar ist. Es versteht sich weiterhin, dass auf die Skala 26 ggf. vollständig verzichtet werden kann, wenn wie im vorliegenden Fall durch die axiale Nut 27 eine Referenz an der Werkzeugmatrize 11 gebildet wird, von der aus der abgetragene Winkelbereich der Kennzeichnung 25 bestimmt werden kann. Es versteht sich auch, dass die Linie 25 nicht zwingend durchgehend ausgeführt sein muss; insbesondere kann diese durch eine Anzahl von Markierungen ersetzt werden, die ebenfalls spiralförmig angeordnet sind, wobei jeweils eine oder mehrere Markierungen in einem jeweiligen durch die radialen Nuten 26 begrenzten Teilbereich der Schräge 24 angeordnet werden.

Eine weitere Möglichkeit, die aktuelle Nachschleiflänge einer Werkzeugmatrize 11 zu bestimmen ist in **Fig. 3** dargestellt. Die dort gezeigte Werkzeugmatrizen 11 weist eine Kennzeichnung mit zehn stirnseitig angebrachten Ausnehmungen **28a-j** (Senkungen) auf, die sich unterschiedlich tief in den zum Nachschleifen vorgesehenen Werkzeugbereich an der Stirnseite 22 der Matrize **11** erstrecken. Im gewählten Beispiel handelt es sich bei den Ausnehmungen 28a-j um zehn Flachsenkungen, deren Tiefe von 0,1 mm bis 1 mm variiert. Anhand der Anzahl der noch verbliebenen Ausnehmungen 28a-j kann der aktuelle Nachschleifzustand der Werkzeugmatrize 11 ermittelt werden. Sind z.B. nur noch sieben der Ausnehmungen 28a-j zu sehen, beträgt der Nachschleifbetrag 0,3 mm. Es versteht sich, dass die Ausnehmungen 28a-j auch in Form von Absätzen bzw. Taschen ausgebildet werden können. Auch kann z.B. eine gestufte Bohrung zur Anzeige der Nachschleiflänge in die Stirnseite 22 eingebracht werden, wobei die Zahl der noch verbleibenden Stufen ein Maß für die Nachschleiflänge darstellt. In allen oben beschriebenen Fällen kann die Nachschleiflänge der Werkzeugmatrize 11 ohne zusätzliche Messmittel erkannt und durch geeignete Maßnahmen ausgeglichen werden, so dass das geforderte Höhenmaß (z.B. von 30 mm) für die Werkzeugmatrize 11 unabhängig von deren Nachschleifzustand erreicht werden kann.

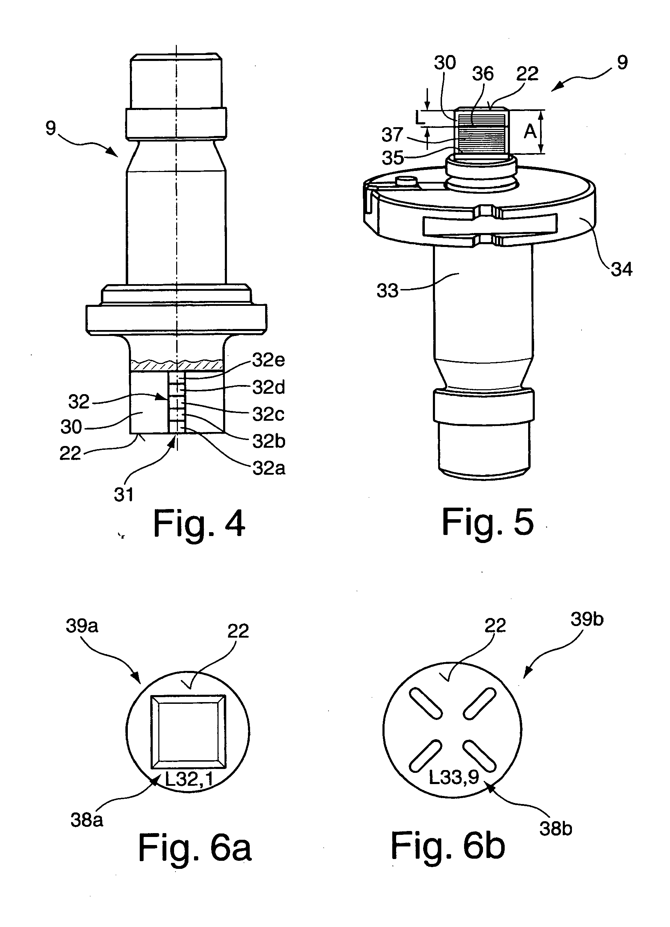

Es versteht sich, dass ein analoges Vorgehen auch zur Bestimmung der Nachschleiflänge des Werkzeugstempels 9 möglich ist. **Fig. 4** zeigt einen solchen Werkzeugstempel 9 in Form eines Stanzstempels. Dieser weist eine Stanzschneide 30 auf, an der ein zum Nachschleifen vorgesehener Bereich des Stanzstempels 9 gebildet ist. An der Stirnseite 22 der Stanzschneide 30 ist eine Bohrung **31** eingebracht. In die Bohrung 31 ist ein Stopfen **32** als Kennzeichnung eingepresst, der in Fig. 4 in einem Teilschnitt durch die Stanzschneide 29 zu erkennen ist. Der Stopfen 32 kann hierbei aus mehreren Abschnitten (Scheiben) 32a-e unterschiedlicher Farbe und/oder unterschiedlicher Dicke gebildet sein. Die Reihenfolge der Farben entspricht hierbei einer Codierung der Nachschleiflänge. Durch den Nachschleifvorgang wird auch der Stopfen 32 teilweise abgetragen, wodurch dieser seine an der Stirnseite 22 ablesbare Farbe wechselt, sobald die Dicke eines jeweiligen Abschnitts 25a-e abgetragen wurde. Die aktuelle Nachschleiflänge kann somit anhand der sichtbaren Farbe des Stopfens 32 an der Stirnseite 22 der Stanzschneide 30 abgelesen werden. Es versteht sich, dass eine entsprechende Kennzeichnung in Form eines Stopfens 32 auch an einer Werkzeugmatrize 11 angebracht werden kann.

In **Fig. 5** ist eine weitere Möglichkeit zur Anzeige des Nachschleifzustands eines Stanzstempels 9 dargestellt, auf dessen Stempelschaft **33** ein Justierring **34** aufgesetzt wurde. An der noch nicht nachgeschliffenen Stanzschneide 30 des Stanzstempels 9 ist eine Kennzeichnung in Form einer Grenzmarkierung **35** in einem Abstand **A** von der Stirnseite 22 angebracht, wobei der Abstand A der Oberkante des dicksten zu bearbeitenden Werkstücks 4 bei maximaler Eintauchtiefe des Stanzstempels 9 unter Berücksichtigung der maximalen Nachschleiflänge L entspricht.

Der Abstand A von der Stirnfläche 22 zur Grenzmarkierung 35 ist bei ungebrauchtem Stanzstempel 9 z.B. gegeben durch:
Nachschleiflänge L (z.B. 6,5mm) + max. Blechdicke (z.B. 8,0mm) + "Eintauchtiefe" (z.B. 1,0mm); ein typischer Wert für den Abstand A liegt somit bei ca. 15,5 mm. Bei der Verwendung eines solchen Abstandes A zwischen der Grenzmarkierung 35 und der Stirnfläche 22 ist sichergestellt, dass die Grenzmarkierung 35 bei der stanzenden Bearbeitung nicht in das zu bearbeitende Werkstück 4 eintaucht, so dass diese vor Verschleiß durch die Kontaktierung des Werkstücks 4 geschützt ist.

Wird der in Fig. 5 gezeigte Stanzstempel 9 nachgeschliffen, so kann bis zu einem verbleibenden Abstand A der Grenzmarkierung von 9 mm der Stanzstempel 9 ohne Einschränkung in allen Blechdicken verwendet werden. Wird nun weiter nachgeschliffen, reduziert sich die noch mit dem Stanzstempel 9 bearbeitbare Blechdicke.

Verzichtet man auf die Optimierung des Stanzhubes, so kann folgendes Schätzraster definiert werden:

| Abstand A zw. Stirnfläche und Markierung: | Bearbeitung problemlos bei: |
|---|---|
| Ca. 15,5mm | max. Blechdicke 8mm (Stempel neu) |
| > 10mm | max. Blechdicke 8mm (Stempel nachgeschliffen) |
| 10mm > A > 5mm | Abstand ca. max. Blechdicke + 2 mm |
| < 5mm | max. Blechdicke ca. 3 mm (Stempel "verbraucht") |

Für den Anwender, der auf einen Blick sehen möchte, ob der Stanzstempel 9 für die gewünschte Aufgabe verwendet werden kann, reicht ein solches grobes Schätzraster aus, d.h. für die Werkzeugauswahl am Werkzeuglagerplatz ist die Markierung hinreichend genau (die aktuelle Ist-Länge wird später in der Werkzeugverwaltung hinterlegt).

Soll z.B. ein Stanzstempel 9 für einen Auftrag mit einer Blechdicke von 3 mm vorbereitet werden, so wählt der Vorrüster nur solche Stanzstempel 9 aus, bei denen die Markierung mindestens 5 mm Abstand zur Stirnfläche 22 hat. Für einen Auftrag mit einer Blechdicke von 8 mm wählt der Vorrüster einen Stanzstempel 9 mit einem Mindestabstand A von ca. 10 mm. Eine zusätzliche Markierung **36** kann hierbei weitere Informationen liefern, z.B. dass die maximale Nachschleiflänge L von ca. 6,5 mm ausgenutzt ist. Mehrere Markierungen dieser Art ergeben eine Skala 37, um die Bestimmung des Abstandes A zwischen der Stirnseite 22 und der Grenzmarkierung 35 zu vereinfachen, jedoch kann sowohl bei der Markierung 36 als auch der Skala 37 Verschleiß durch Reibung der Stanzschneide 30 am Werkstück 4 auftreten.

Soll eine Unterscheidung zwischen neuen und nachgeschliffenen Werkzeugkomponenten vorgenommen werden, so kann auf die Stirnseite 22 eine Kennzeichnung - typischer Weise in Form einer Beschriftung - aufgebracht werden, welche den Neuzustand kennzeichnet. So kann z.B. die Stirnseite 22 der in Fign. 4 und 5 gezeigten Stanzstempel 9 mit einer Markierung versehen sein, z.B. indem die Stirnfläche 22 des Stanzstempels vollflächig mit einer Farbe (z.B. schwarz) oder durch einen Punkt gekennzeichnet wird. Durch das (flächige) Nachschleifen wird die Markierung an der Stirnseite abgetragen, so dass der Nachschleifzustand erkennbar ist. Es versteht sich, dass ein entsprechendes Vorgehen auch bei Werkzeugmatrizen oder anderen Werkzeugkomponenten möglich ist.

Neben der bloßen Kennzeichnung des Neuzustands kann die stirnseitige Kennzeichnung auch Informationen über eine Eigenschaft der Werkzeugkomponente enthalten, z.B. über eine Gesamtlänge/Dicke der Werkzeugkomponente, oder über die Form bzw. die Maschinengruppe, an der die Werkzeugkomponente eingesetzt werden soll. Die Kennzeichnung kann hierbei z.B. in Form von Text und/oder Symbolen ausgebildet sein, in denen eine bestimmte Eigenschaft der Werkzeugkomponente codiert ist.

Beispiele von Kennzeichnungen 38a, 38b an der Stirnseite 22 zweier Umformwerkzeuge **39a**, **39b** sind in **Fign. 6a****,b** gezeigt. Die Kennzeichnungen 38a, 38b weisen jeweils Zahlenangaben über die Werkzeuglänge (in mm) auf, wobei ein Symbol (L) auf die Art der Information hinweist. Da die Umformwerkzeuge 39a, 39b nicht nachgeschliffen werden, bleibt die Information über die Werkzeuglänge erhalten, sofern diese nicht aufgrund von Verschleiß durch Reibung mit dem Werkstück abgetragen wird. Bei Umformwerkzeugen 39a, 39b oder bei anderen Werkzeugkomponenten, welche nicht nachgeschliffen werden, z.B. bei Stanznadeln, kann eine zusätzliche Kennzeichnung von bestimmten Eigenschaften (Länge/Form, etc.) auch an anderer Stelle als an der Stirnseite 22 erfolgen. Es versteht sich, dass die stirnseitige Kennzeichnung auch bei Werkzeugstempeln vorgesehen werden kann, die als Einsätze für ein Revolverwerkzeug ausgebildet sind, da auch diese nachgeschliffen werden, wobei typische (maximale) Nachschleiflängen dort bei ca. 0,5 mm liegen.

Die Beschriftungen 38a, 38b können z.B. durch Laserbeschriften (automatisiert mit einem Markierlaser) auf die zu kennzeichnenden Komponenten aufgebracht werden, ggf. in einem Arbeitsschritt zusammen mit weiteren Beschriftungen. Es versteht sich, dass alternativ auch eine manuelle Kennzeichnung erfolgen kann. Auf eine zusätzliche spanende Bearbeitung bzw. die Anbringung eines zusätzlichen Beschriftungselements (Schild, Aufkleber, Anhänger) kann in diesem Fall verzichtet werden. Es versteht sich weiterhin, dass auch die Nachrüstung von bereits im Feld befindlichen Werkzeugkomponenten mit einer Kennzeichnung in Form einer Beschriftung auf besonders einfache Weise erfolgen kann.

Die an den oben beschriebenen Werkzeugkomponenten abgelesenen Informationen, insbesondere die Nachschleiflänge betreffend, können von einem Maschinenbediener an einem Bedienpult (nicht gezeigt) der Werkzeugmaschine 1 von Fig. 1 eingegeben und in den Speichermitteln 19 (Datenbank) abgelegt werden, so dass diese Informationen beim Bearbeitungsprozess in der Werkzeugmaschine 1 zur Verfügung stehen.

## Patentansprüche

1. Werkzeugkomponente, insbesondere Werkzeugmatrize (11) oder Werkzeugstempel (9, 39a, 39b), zum stanzenden und/oder umformenden Bearbeiten von Werkstücken (4), insbesondere von Blechen, mit einer Stirnseite (22) zur Kontaktierung des Werkstücks (4), von der sich ein insbesondere zum Nachschleifen vorgesehener Werkzeugbereich (24, 30) erstreckt, wobei an der Werkzeugkomponente (9, 11, 39a, 39b) mindestens eine Kennzeichnung (25, 28a-j, 32a-e, 35, 36, 38a, 38b) zur Anzeige des Nachschleifzustands angebracht ist,
**dadurch gekennzeichnet,**
**dass** sich an die Stirnseite (22) eine Schräge (24) anschließt, an der die Kennzeichnung (25) spiralförmig umläuft, oder
**dass** sich mindestens eine Eigenschaft, insbesondere die Farbe oder die Form der Kennzeichnung (28a-j, 32a-e), in Abhängigkeit vom Abstand zur Stirnselte (22) stufenweise verändert, so dass die Kennzeichnung (28a-j; 32a-e) selbst als Skala dient.

2. Werkzeugkomponente nach Anspruch 1, bei der sich die Kennzeichnung (25, 28a-j, 32a-e) entlang des zum Nachschleifen vorgesehenen Werkzeugbereichs (24, 30) in einer Richtung senkrecht zur Stirnseite (22) erstreckt.

3. Werkzeugkomponente nach einem der vorhergehenden Ansprüche, weiter umfassend eine Skala (26) zum Ablesen des Zustands der Kennzeichnung (25).

4. Werkzeugkomponente nach Anspruch 3, bei der die Skala (26) in Form eines Ziffernblatts ausgebildet ist.

5. Werkzeugkomponente nach einem der vorhergehenden Ansprüche, bei der die Kennzeichnung eine Mehrzahl von an der Stirnseite (22) angebrachten Ausnehmungen (28a-e) umfasst, die sich unterschiedlich weit in den zum Nachschleifen vorgesehenen Werkzeugbereich (24) erstrecken.

6. Werkzeugkomponente nach einem der vorhergehenden Ansprüche, bei der die Kennzeichnung in Form eines Stopfens (32) ausgebildet ist, der in eine Öffnung (31) an der Stirnseite (22) eingebracht ist.

7. Werkzeugkomponente nach einem der vorhergehenden Ansprüche, bei welcher die Kennzeichnung (35, 36) in einem vorgegebenen Abstand (A) zur Stirnseite (22), insbesondere außerhalb des zum Nachschleifen vorgesehenen Werkzeugbereichs (30), angeordnet ist.

8. Werkzeugkomponente nach einem der vorhergehenden Ansprüche, bei welcher die Kennzeichnung (36) in einem vorgegebenen Abstand zur Stirnseite angebracht ist, welcher der maximalen Nachschleiflänge (L) der Werkzeugkomponente (9) entspricht.

9. Werkzeugkomponente nach einem der vorhergehenden Ansprüche, bei der die Kennzeichnung (38a, 38b) auf der Stirnseite (22) angebracht ist, insbesondere in Form einer Beschriftung.

10. Werkzeugkomponente nach einem der vorhergehenden Ansprüche, bei der die Kennzeichnung (38a, 38b) zum Ablesen mindestens einer weiteren Eigenschaft der Werkzeugkomponente ausgebildet ist.

11. Werkzeugmaschine (1) zum stanzenden und/oder umformenden Bearbeiten eines plattenartigen Werkstücks (4), vorzugsweise eines Blechs, umfassend mindestens eine Werkzeugkomponente (9, 11, 39a, 39b) nach einem der vorhergehenden Ansprüche.

## Claims

1. Tool component, in particular tool die (11) or tool stamp (9, 39a, 39b) for the punching and/or shaping processing of workpieces (4), in particular metal sheets, having for contacting the workpiece (4) an end face (22), from which a tool region (24, 30) which is provided in particular for regrinding extends, wherein at least one identification mark (25, 28a-j, 32a-e, 35, 36, 38a, 38b) for displaying the regrinding state is applied to the tool component (9, 11, 39a, 39b),
**characterized in that** the end face (22) is adjoined by an inclined portion (24) around which the identification mark (25) extends in a helical manner, or
at least one feature, in particular the color or the shape of the identification mark (28a-j, 32a-e), gradually changes depending on the spacing from the end face (22) such that the identification mark (28a-j; 32a-e) itself is used as scale.

2. Tool component according to claim 1, wherein the identification mark (25, 28a-j, 32a-e) extends along the tool region (24, 30) provided for regrinding in a direction perpendicular relative to the end face (22).

3. Tool component according to any one of the preceding claims, further comprising a scale (26) for reading the state of the identification mark (25).

4. Tool component according to claim 3, wherein the scale (26) is constructed in the form of a dial.

5. Tool component according to any one of the preceding claims, wherein the identification mark comprises a plurality of recesses (28a-e) which are applied to the end face (22) and which extend by different distances into the tool region (24) provided for regrinding.

6. Tool component according to any one of the preceding claims, wherein the identification mark is constructed in the form of a plug (32) which is introduced into an opening (31) at the end face (22).

7. Tool component according to any one of the preceding claims, wherein the identification mark (35, 36) is arranged with a predetermined spacing (A) relative to the end face (22), in particular outside the tool region (30) provided for regrinding.

8. Tool component according to any one of the preceding claims, wherein the identification mark (36) is applied with a predetermined spacing relative to the end face, which corresponds to the maximum regrinding length (L) of the tool component (9).

9. Tool component according to any one of the preceding claims, wherein the identification mark (38a, 38b) is applied at the end face (22), in particular in the form of an inscription.

10. Tool component according to any one of the preceding claims, wherein the identification mark (38a, 38b) is constructed for reading at least one other feature of the tool component.

11. Machine tool (1) for the punching and/or shaping processing of a plate-like workpiece (4), preferably a metal sheet, comprising at least one tool component (9, 11, 39a, 39b) according to any one of the preceding claims.

## Revendications

1. Composant d'outillage, en particulier matrice d'outillage (11) ou poinçon d'outillage (9, 39a, 39b) dévolu(e) à l'usinage par poinçonnage et/ou par déformation de pièces (4), notamment de tôles, comportant une face extrême (22) qui est conçue pour entrer en contact avec la pièce (4), et à partir de laquelle s'étend une zone d'outil (24, 30) notamment affectée au réaffûtage, au moins un marquage distinctif (25, 28a-j, 32a-e, 35, 36, 38a, 38b) étant ménagé sur ledit composant d'outillage (9, 11, 39a, 39b), en vue d'afficher l'état de réaffûtage,
**caractérisé par le fait**
**que** la face extrême (22) fusionne dans un chanfrein (24), sur la périphérie duquel le marquage distinctif (25) décrit un tracé spiroïdal, ou
**qu'**au moins une propriété, en particulier la couleur ou la forme dudit marquage distinctif (28a-j, 32a-e) varie graduellement en fonction de la distance vis-à-vis de ladite face extrême (22), de sorte que ledit marquage distinctif (28a-j ; 32a-e) remplit, par lui-même, la fonction d'une échelle graduée.

2. Composant d'outillage selon la revendication 1, dans lequel le marquage distinctif (25, 28a-j, 32a-e) s'étend dans une direction perpendiculaire à la face extrême (22) le long de la zone d'outil (24, 30) affectée au réaffûtage.

3. Composant d'outillage selon l'une des revendications précédentes, incluant en outre une échelle graduée (26) dédiée à la lecture de l'état du marquage distinctif (25).

4. Composant d'outillage selon la revendication 3, dans lequel l'échelle graduée (26) est réalisée sous la forme d'un cadran.

5. Composant d'outillage selon l'une des revendications précédentes, dans lequel le marquage distinctif comprend une pluralité d'évidements (28a-e) qui sont façonnés à la face extrême (22) et qui pénètrent, suivant des profondeurs différentes, dans la zone d'outil (24) affectée au réaffûtage.

6. Composant d'outillage selon l'une des revendications précédentes, dans lequel le marquage distinctif est réalisé sous la forme d'un bouchon (32) inséré dans un orifice (31) pratiqué à la face extrême (22).

7. Composant d'outillage selon l'une des revendications précédentes, dans lequel le marquage distinctif (35, 36) se trouve à une distance préétablie (A) vis-à-vis de la face extrême (22), en particulier à l'extérieur de la zone d'outil (30) affectée au réaffûtage.

8. Composant d'outillage selon l'une des revendications précédentes, dans lequel le marquage distinctif (36) se trouve, vis-à-vis de la face extrême, à une distance préétablie qui correspond à la longueur maximale de réaffûtage (L) dudit composant d'outillage (9).

9. Composant d'outillage selon l'une des revendications précédentes, dans lequel le marquage distinctif (38a, 38b) est ménagé sur la face extrême (22), notamment sous la forme d'une inscription.

10. Composant d'outillage selon l'une des revendications précédentes, dans lequel le marquage distinctif (38a, 38b) est réalisé en vue de la lecture d'au moins une propriété supplémentaire dudit composant d'outillage.

11. Machine-outil (1) dévolue à l'usinage par poinçonnage et/ou par déformation d'une pièce (4) de type aplati, de préférence d'une tôle, comprenant au moins un composant d'outillage (9, 11, 39a, 39b) conforme à l'une des revendications précédentes.
